# EUROPÄISCHE PATENTSCHRIFT

(11) **EP 1 747 354 B1**
(45) Veröffentlichungstag und Bekanntmachung des Hinweises auf die Patenterteilung: **06.01.2010**
(21) Anmeldenummer: 05748417.2
(22) Anmeldetag: 04.05.2005
(51) Int. Cl.: F01N 3/04

(54) **WÄRMETAUSCHER, INSBESONDERE FÜR ABGASKÜHLER VON BRENNKRAFTMASCHINEN**
HEAT EXCHANGER IN PARTICULAR FOR EXHAUST COOLERS ON INTERNAL COMBUSTION ENGINES
ECHANGEUR DE CHALEUR, EN PARTICULIER POUR REFROIDISSEURS DE GAZ D'ECHAPPEMENT DE MOTEURS A COMBUSTION INTERNE

(30) Priorität: 07.05.2004 DE 102004023319; 21.06.2004 DE 102004029863; 20.08.2004 DE 102004040667; 20.08.2004 DE 102004040668
(43) Veröffentlichungstag der Anmeldung: 31.01.2007
(73) Patentinhaber: Behr GmbH & Co. KG, 70469 Stuttgart (DE)
(72) Erfinder: BECK, Claus, 73734 Esslingen (DE); PALANCHON, Herve, M8V 1A7 Etobicoke, Ontario (CA); SCHINDLER, Martin, 97273 Kürnach (DE)
(74) Vertreter: Grauel, Andreas
(86) Internationale Anmeldenummer: PCT/EP2005/004852
(87) Internationale Veröffentlichungsnummer: WO 2005/111386

(56) Entgegenhaltungen:
- WO-A-03/062625
- DE-A1- 10 228 619
- DE-A1- 19 962 863
- US-A- 6 141 961
- US-A1- 2003 033 801

## Beschreibung

Die Erfindung betrifft einen Wärmetauscher, insbesondere für Abgaskühler von Brennkraftmaschinen.

Es sind Wärmetauscher für vielfältige Verwendungen bekannt. Darüber hinaus ist es auch bekannt, einen sogenannten Bypasskanal vorzusehen, welcher das den Wärmetauscher durchströmende Trägermedium am Wärmetauschkörper vorbeiführt. Das Trägermedium passiert dann den Wärmetauscher, ohne dass ein wesentlicher Energieaustausch mit dem Trägermedium stattgefunden hat, während beim Durchströmen des Wärmeaustauschbereichs Energie an ein Wärmetauschermedium abgegeben oder von selbigem auf das Trägermedium übertragen wird.

Zur Regelung oder Steuerung der sich stromabwärts des Wärmetauschers ergebenden Temperatur des Trägermediums ist es bekannt, stromaufwärts des Wärmetauschers in dem zum Wärmetauscher hinführenden Strömungskanal eine Schaltklappe anzuordnen, welche das anströmende Trägermedium in variable Teilströme aufteilt, von denen einer den Wärmetauscherkanal und der andere den Bypasskanal passiert. Durch Bestimmen des relativen Anteils des Volumenstroms durch den Bypasskanal im Verhältnis zu dem Volumenstrom durch den Wärmetauscherkanal mittels der Klappe wird die sich stromabwärts des Wärmetauschers ergebende Mischtemperatur festgelegt.

Um die Teilströmungen in dem Bereich zwischen der Schaltklappe und dem Beginn des Bypasskanals getrennt zu halten, ist ein Trennblech vorgesehen.

Die US 6,141,961 offenbart eine Abgasvorrichtung eines Kraftfahrzeugs mit einem Abgaskühlerbereich und einem Bypass.
Die DE 199 62 863 A1 offenbart einen Wärmeübertrager mit einem Bypasskanal.
Die WO 03/062625 A1 offenbart einen Abgaswärmeübertrager mit einer Bypassklappe.

Ein häufiges Problem bei derartigen Trennblechen ist der Leckagestrom, der im Bereich des Trennblechs und am Übergang von den Trennblechen zu dem Wärmetauscherkanal bzw. zu dem Bypasskanal hin ergibt.

Aufgabe der Erfindung ist es, durch geeignete Gestaltung des Trennblechs eine möglichst leckagestromfreie Auftrennung des Trägermedienstromes in zwei Teilströme zu ermöglichen.

Diese Aufgabe wird durch einen Wärmetauscher gemäß der Erfindung gelöst.

Ein Wärmetauscher, wie er insbesondere als Abgaskühler von Brennkraftmaschinen Verwendung finden kann, weist einen Wärmetauscherkanal und einen Bypasskanal auf, wobei stromaufwärts oder stromabwärts des Wärmetauschers im Strömungskanal eine Schaltklappe angeordnet ist, welche das anströmende Trägermedium auf Wärmetauscherkanal und Bypasskanal aufteilt. Zum Aufrechterhalten der Aufteilung zwischen dem Teilstrom durch den Bypasskanal und dem Teilstrom durch den Wärmetauscherkanal ist ein Trennblech vorgesehen, welches sich gemäß der Erfindung von der Schaltklappe bis hin zum Beginn des Bypasskanals erstreckt.

Dadurch, dass sich das Trennblech bis hinein zu dem Beginn des Bypasskanals erstreckt, wird eine gute Separation der beiden Teilströme erreicht und weitgehend größere Leckageströme zwischen den beiden Teilströmen verhindert. Diese Vorgehensweise ermöglicht eine genaue Aufteilung der beiden Teilströme in ihrem Verhältnis zueinander und somit einer guten Regelung oder Steuerung der Temperatur des Trägermediums stromabwärts des Wärmetauschers. Bei einem Wärmetauscher wird im Wärmetauscherkanal Energieträgermedium auf das Wärmetauschermedium, welche über eine Austauschfläche im Bereich des Wärmeaustauscherkanals in wärmeübertragenden Kontakt zum Trägermedium gelangt, an dieses abgegeben oder aber von diesem auf das Trägermedium übertragen. Dabei ist der Energieaustausch im Bereich des Wärmetauscherkanals durch die unterschiedlichen Energieinhalte von Trägermedium und Wärmetauschermedium vorgegeben. Durch die variable Veränderung der Anteile der beiden Teilströme bei gleichzeitigem Vermeiden von Leckageströmen, welche einen nicht berechenbaren Einfluss auf die Teilströme haben, kann eine gute Mischtemperatur stromabwärts des Wärmetauschers erzeugt werden, so dass die thermische Energie des Trägermediums stromabwärts des Wärmetauschers steuerbar, bzw. regelbar ist. Die Leckageströme werden deshalb vermieden, da sich bei der erfindungsgemäßen Ausgestaltung das Trennblech bis hin zum Beginn des Bypasskanals erstreckt. Es ist also in keiner Spalte zwischen dem Bypasskanal und dem Trennblech gegeben, so dass in diesem Bereich gegenüber üblichen Lösungen bestehende Leckageströme vermieden werden können.

Erfindungsgemäß ist das Trennblech derart abgekröpft, dass eine vertikal zur Durchströmrichtung ausgerichtete Stirnwand ausgebildet ist. Die Stirnwand weist einen Durchbruch auf, in den das Innenrohr mündet, wobei in diesem Abschnitt Durchbruch und Innenrohr einander entsprechende Kontur aufweisen und in dem Bereich derart miteinander verbunden, insbesondere verschweißt sind, dass der Durchbruch die Zuströmöffnung für das Innere des Innenrohrs bildet.

Gemäß einer bevorzugten Ausgestaltung der Erfindung ist das Trennblech mit dem Bypasskanal verbunden, insbesondere verschweißt. Durch die Verbindung zwischen Trennblech und Bypasskanal wird sichergestellt, dass ein Leckagestrom zwischen Trennblech und Beginn des Bypasskanals vermieden wird und somit eine gute und zuverlässige Aufteilung der Teilströme gewährleistet ist.

Gemäß weiterer vorteilhafter Ausgestaltung der Erfindung ist als Bestandteil des Wärmetauschers zwischen Strömungskanal und Beginn des Bypasskanals bzw. des Wärmetauscherkanals ein Diffusor ausgebildet, wobei das Trennblech zumindest bereichsweise mit dem Diffusor verbunden ist. Aufgabe des Diffusors ist es, einen strömungsgünstigen Übergang zwischen dem Strömungskanal mit seinem geringeren Strömungsquerschnitt und dem Wärmetauscher mit dem größeren Strömungsquerschnitt zu ermöglichen. Der erhöhte Strömungsquerschnitt im Bereich des Wärmetauschers, insbesondere des Wärmetauscherskanals ermöglicht es, den gleichen Volumenstrom bei geringerer Strömungsgeschwindigkeit durchzuleiten. Die verringerte Strömungsgeschwindigkeit erhöht die Möglichkeit des Energieaustausches zwischen Trägermedium und Wärmetauschermedium im Bereich des Wärmetauscherkanals. Durch die zumindest bereichsweise erfolgende Verbindung des Trennblechs mit dem Diffusor wird weiterhin eine verbesserte Dichtigkeit und damit ein geringerer Leckagestrom zwischen den beiden Teilströmen, welche durch die Schaltklappe erzeugt werden. Dabei ist insbesondere in seitlichen Abschnitten bezüglich der Durchströmung des Diffusors eine Anlage des Trennblechs am Diffusor gegeben, wobei insbesondere im Bereich dieser Anlage eine Verbindung zwischen Trennblech und Diffusor hergestellt ist, wobei diese Verbindung insbesondere als Schweißverbindung ausgebildet ist.

Es entspricht bevorzugter Ausgestaltung der Erfindung, wenn die Schaltklappe an einer Schwenkachse im Strömungskanal gehalten ist, wobei sich die Klappenfläche der Schaltklappe stromaufwärts der Schwenkachse streckt und wobei sich das Trennblech bis hin zur Schwenkachse erstreckt und insbesondere mit ihr verbunden ist. Auch diese Maßnahme dient dazu, einen spalt- und leckagefreien Kanal auszubilden, der vom Ende der Schaltklappe bis hin in den Bypasskanal des Wärmetauschers führt.

Gemäß der Erfindung, besteht der Bypasskanal aus zwei ineinander angeordneten Rohren, nämlich einem Außenrohr und einem Innenrohr, wobei das Innenrohr innen also in seinem Kern vom Trägermedium durchströmt wird, welches dadurch am Wärmetauscherkanal vorbeigeführt wird.

Die Maßnahme, ein Doppelrohr mit Innen- und Außenrohr vorzusehen, bietet zum einen die Möglichkeit, das Innenrohr im Bypasskanal so anzuordnen, dass ein thermisches Längenspiel ermöglicht wird. Durch diese Maßnahme ist die Wärmedehnung des Innenrohrs aufgrund des durchströmenden Trägermediums kompensierbar und über entsprechende Spiele und loser Halterung des einen Rohrs im Inneren des anderen, möglich.

Erfindungsgemäß erstreckt sich das Trennblech bis hin zum Innenrohr. Durch diese Maßnahme wird ein Überführen des Teilungsstroms, welcher den Bypasskanal durchströmen soll bis hin zum Innenrohr und damit zum Beginn des Strömungskanals leckagefrei geführt. In weiterführender Ausgestaltung ist insbesondere vorgesehen, dass das Innenrohr an dem Trennblech geführt gehalten bzw. befestigt ist, insbesondere mit selbigem verschweißt ist. Durch diese Maßnahme wird zunächst sichergestellt, dass das Trennblech und das Innenrohr in permanenter Anlage zueinander bleiben und Leckageströme an dieser Stelle nicht entstehen können. Darüber hinaus wird zwischen Kühler und Bypassleitung eine verbesserte innere Dichtheit erreicht und Toleranzprobleme zwischen Trennblech und Kühler werden vermieden. Auch Probleme mit Toleranz- und Lageausgleich werden dadurch vermieden, dass eine feste Verbindung zwischen Trennblech und Innenrohr geschaffen wird.

Diese Ausgestaltung stellt sicher, dass der vollständige Teilstrom in das Innenrohr hineingeführt wird und ein guter, günstig herzustellender Übergang zwischen dem Strömungskanal und dem Innenrohr des Bypasskanals gegeben ist. Dabei ist es insbesondere möglich, dass bei der Montage das Trennblech direkt an dem Innenrohr gehalten oder befestigt ist und somit auf Seiten des Wärmetauschers montiert ist und nicht an der Schaltklappe. Das Trennblech kann somit zugleich zur Lagehalterung des Innenrohrs im Wärmetauscher dienen und darüber hinaus ist ein schmaler Spalt zum Ausgleich von Längenspielen im Bereich unmittelbar nach der Schwenkachse der Schaltklappe von geringerer Bedeutung, da diese im Strömungsschatten der Achskonstruktion liegt und damit nur ein geringerer Leckagestrom auftritt als in den Bereichen, in denen das Trennblech strömungsleitend, strömungsumlenkend und die Strömung in das Innenrohr des Bypasskanals hineinführend wirkt. Es kann insbesondere auch vorgesehen sein, dass das Innenrohr im Durchbruch geführt gehalten ist aber keine lagefeste Befestigung ausgebildet ist, sondern eine Art Lagerung, so dass das Innenrohr bei thermischer Ausdehnung im Durchbruch axial verschiebbar gehalten ist.

Gemäß weiterführender bevorzugter Ausgestaltung der Erfindung ist vorgesehen, dass sich die Stirnwand zumindest über einen Teilbereich des Diffusors hinweg an diesen angrenzt und vorzugsweise in diesem Anlagebereich mit dem Diffusor verbunden, insbesondere verschweißt ist. Durch die Maßnahme wird eine günstige Halterung für das Trennblech geschaffen, zugleich wird das Innenrohr des Bypasskanals sicher gehalten und in einer definierten Lage geführt.

Im übrigen ist die Erfindung nachfolgend auch anhand des in der Zeichnung dargestellten Ausführungsbeispiels näher erläutert; dabei zeigt:
Figur 1 einen Schnitt in Längsrichtung durch einen Strömungskanal und einen Wärmetauscher im Bereich eines Trennblechs;
Figur 2 eine Querschnittdarstellung durch das in Figur 1 Gezeigte;

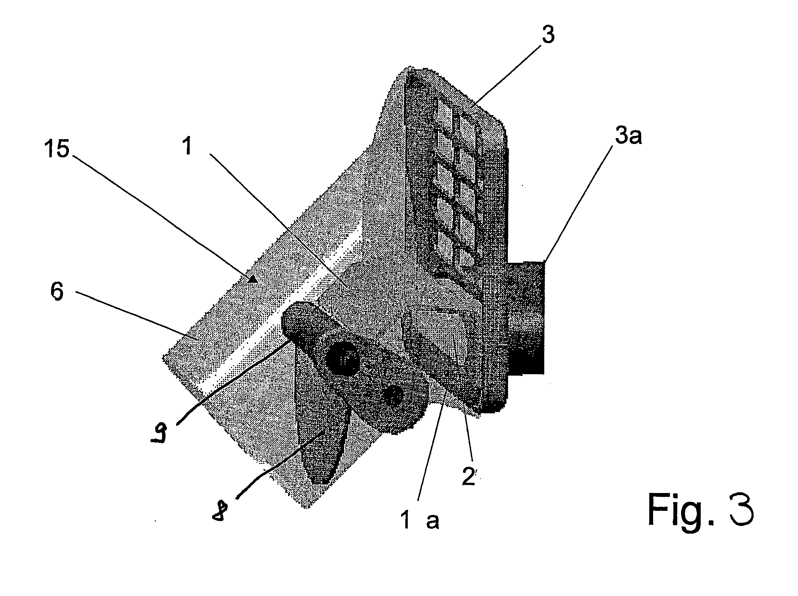

Figur 3 eine Schrägansicht eines Strömungskanals und eines Wärmetauschers.

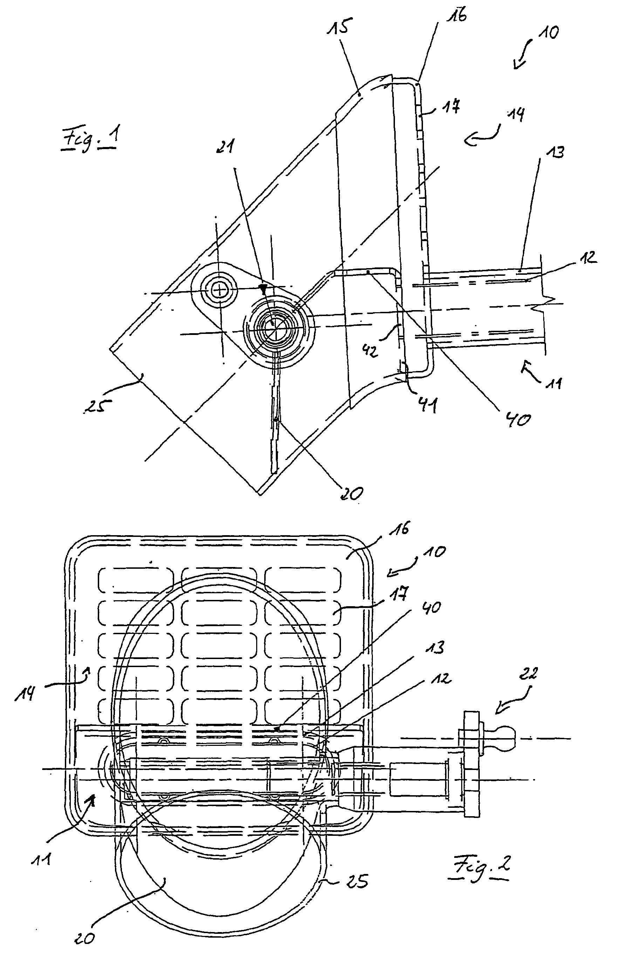

Die Figuren 1 und 2 zeigen eine Längs- bzw. eine Querschnittsdarstellung durch die Strömungsführung des Trägermediums im Einströmbereich vor einem Wärmetauscher (10). Der Wärmetauscher (10) ist zweiflutig ausgebildet, wobei eine der beiden Fluten den Bypasskanal (11) und die andere Flut den Wärmetauscherkanal (14) bildet. Der Wärmetauscherkanal (14) ist dabei so ausgebildet, dass ein Energieaustausch zwischen dem Trägermedium und einem im Bereich des Wärmetauscherkanals (14) in Energieaustausch zum Trägermedium stehenden Wärmetauschermedium ermöglicht wird und somit ein Erwärmen oder Abkühlen des Trägermediums zu ermöglichen. Bei dem dargestellten Ausführungsbeispiel handelt es sich bei dem Wärmetauscher um einen Abgaskühler für Brennkraftmaschinen, bei dem das Trägermedium durch den Abgasstrom gebildet wird und bei dem dementsprechend als Wärmetauschermedium Kühlwasser bereitgestellt wird. Dabei wird thermische Energie vom Trägermedium Abgas auf das Wärmetauschermedium Wasser übertragen und somit die Temperatur des Abgasstroms reduziert.

Das durch den Bypasskanal (11) geführte Abgas, also Trägermedium, gelangt nahezu mit unveränderter Temperatur an das strömungsabwärts gelegene Ende des Wärmetauschers. Durch Bestimmen des Anteils des Teilstromes, welcher den Wärmetauscher im Bypasskanal durchströmt und welcher den Wärmetauscherkanal durchströmt und eine nachfolgende Mischung der beiden Teilströme kann die Temperatur des Abgasstromes stromabwärts des Wärmetauschers gesteuert oder geregelt werden.

Zum Aufteilen des anströmenden Abgases in die beiden Teilströme dient die Schaltklappe (20), welche durch eine Stelleinrichtung (22) (nur teilweise dargestellt) in ihrer Lage verstellbar in dem zum Wärmetauscher (10) führenden Strömungskanal (25), welcher durch ein Rohr definiert ist, gehalten ist. In den beiden Figuren ist die Position der Schaltklappe (20) gezeigt, in der der vollständige Abgasstrom in den Wärmetauscherkanal geleitet wird und kein Teilstrom durch den Bypasskanal (11) geführt wird.

Der Bypasskanal (11) wird durch ein einzelnes Rohr oder zwei ineinander geführte Rohre gebildet. Das Außenrohr (13) umgibt ein Innenrohr (12) durch dessen Kern, also Mitte der Teilstrom des Abgases geleitet wird, welcher den Bypasskanal durchströmt. Durch diese Maßnahme ist ein zwischen den beiden Rohren isolierender Spalt gegeben.

Den Strömungsübergang zwischen dem Strömungskanal (25) und dem Wärmetauscher (10), der einen größeren durchströmbaren Querschnitt als der Strömungskanal (25) aufweist, ist der Diffusor (15) ausgebildet. Der Diffusor ist im Bereich des Wärmetauscherkanals (14) durch einen Boden (16) begrenzt, in dem die Kanäle (17) münden, welche den vom Trägermedium durchströmbaren Bereich des Wärmetauscherkanals (14) bilden. Im Bereich außerhalb des Wärmetauscherkanals mündet das Außenrohr (13) des Bypasskanals (11) in dem Boden (16), der einen entsprechenden Durchbruch aufweist. Den Boden (16) durchsetzt das Innenrohr (12) des Wärmetauscherkanals, welches bis in den Diffusor (15) hineinragt.

Um die beiden Teilströme, welche durch die Klappe (20) aus dem zuströmenden Abgasstrom erzeugt werden, voneinander zu trennen, ist in dem Diffusor (15) das Trennblech (40) angeordnet, welches sich bis zu der Schwenkachse (21) im Strömungskanal (25) hin erstreckt. Dabei liegt das Trennblech (40) im Diffusor (15) seitlich an der Seitenwand an und ist vorzugsweise mit diesem verschweißt. Es weist darüber hinaus einen Durchbruch (42) auf, welcher in einem sich senkrecht zur Durchströmrichtung erstreckenden Stirnwand (41) befindet, welche Teil des Trennblechs (40) ist. In diesen Durchbruch (42) hinein ragt das Innenrohr (12) des Bypasskanals (11), so dass entweder durch Verschweißen eine feste Verbindung zwischen Trennblech (40) und Innenrohr (11) geschaffen wird oder aber durch geführtes Halten des Innenrohrs (11) im Durchbruch (42) eine im Wesentlichen fluiddichte aber durch Axialverschiebung des Innenrohrs (11) einen thermischen Längenausgleich ermöglichende Verbindung zwischen dem Trennblech (40) und dem Bypasskanal (11) geschaffen wird.

Das Trennblech (40) erstreckt sich dabei in den Strömungskanal (25) hinein und liegt auch an diesem seitlich so an, dass Nebenstrom am Trennblech (40) vorbei zwischen den beiden durch das Trennblech (40) voneinander getrennten Fluten für die Teilströme zugeführten Abgases bzw. Trägermediums verhindert wird. Das Trennblech (40) erstreckt sich bis hin zur Schweinkachse (21) und ist an der Achsführung bzw. an einer Achshülle, welche die schwenkbare Achse mit der Schaltklappe (20) zumindest bereichsweise umhüllt, in Anlage. In diesem Anlagebereich kann eine Befestigung, insbesondere eine Schweißpulversteckverbindung zwischen dem Trennblech (40) und der Schwenkachse (21) gegeben sein.

Fig. 15 zeigt einen Ventilkanal mit gewinkelter Ausrichtung. Ein Leitblech 1 umfaßt einen abgewinkelten Rand 1 a mit einer dem Querschnitt des Innenrohrs 2 angepaßten Durchbrechung. Zunächst wird das Leitblech 1 mit einer Stirnseite des Innenrohrs 2 um den Rand der Durchbrechung herum verschweißt. Diese Einheit wird dann in den Durchgang 3a des Gehäuse 3 eingeschoben, wobei beispielsweise mittels Noppen eine gute reibschlüssige Halterung des Innenrohrs erreicht ist. Nachfolgend wird das Innenrohr und/oder das Leitblech 1 mit dem Gehäuse verschweißt, wobei gegebenenfalls ein Anpunkten ausreichend ist.

Hiernach wird der Ventilkanal 6 über das Leitblech 1 geschoben und gegebenenfalls die Ventilklappe 8 und die Welle 9 montiert. Nach genauer Ausrichtung des Ventilkanals 6 zum Ventilelement 15 wird der Ventilkanal 6 mit dem Gehäuse mit einer um die Stirnseite des Gehäuses umlaufenden Schweißnaht verschweißt.

Je nach Anforderungen sind die jeweiligen besonderen Merkmale der beschriebenen Ausführungsbeispiele nicht auf diese beschränkt, sondern frei miteinander kombinierbar, wobei gegebenenfalls durch bestimmte Kombinationen besonders vorteilhafte Wärmetauscher ausbildbar sind.

## Patentansprüche

1. Wärmetauscher (10), insbesondere Abgaskühler von Brennkraftmaschinen, mit einem Wärmetauscherkanal (14) und einem Bypasskanal (11), wobei stromaufwärts oder stromabwärts des Wärmetauschers (10) im Strömungskanal (25) eine Schaltklappe (20) angeordnet ist, welche das anströmende Trägermedium auf Wärmetauscherkanal (14) und Bypasskanal (11) aufteilt und an welche sich ein Trennblech (40) zum Separieren der beiden Teilströme anschließt, wobei das Trennblech (40) sich bis zum Beginn des Bypasskanals (11) erstreckt, wobei der Bypasskanal (11) aus zwei ineinander angeordneten Rohren, einem Außenrohr (13) und einem Innenrohr (12) gebildet ist, wobei das Trägermedium das Innenrohr (12) in seinem Kern durchströmt, wobei das Innenrohr (12) sich bis zu dem Trennblech (40) erstreckt und mit dem Trennblech (40) verbunden ist, insbesondere an dem Trennblech geführt gehalten oder befestigt ist, **dadurch gekennzeichnet, dass** das Trennblech (40) eine Vertikal zur Durchströmungsrichtung ausgerichtete Stirnwand (41) ausbildet, welche einen Durchbruch (42) aufweist, in den das Innenrohr (12) mündet.

2. Wärmetauscher (10) nach Anspruch 1, **dadurch gekennzeichnet, dass** das Trennblech (40) mit dem Bypasskanal (11) verbunden ist.

3. Wärmetauscher (10) nach einem der vorangegangenen Ansprüche,
**dadurch gekennzeichnet, dass** zwischen Strömungskanal (25) und Beginn des Bypasskanals (11) ein Diffusor (15) ausgebildet ist, wobei das Trennblech (40) zumindest bereichsweise mit dem Diffusor (15) verbunden, insbesondere verschweißt ist.

4. Wärmetauscher(10) nach einem der vorangegangenen Ansprüche,
**dadurch gekennzeichnet, dass** die Schaltklappe (20) an einer Schwenkachse (21) im Strömungskanal (25) gehalten ist, wobei sich das Trennblech (40) bis zur Schwenkachse (21) erstreckt und insbesondere an der Schwenkachse (21) gehalten, insbesondere befestigt, vorzugsweise angeschweißt ist.

5. Wärmetauscher (10) nach einem der vorangegangenen Ansprüche,
**dadurch gekennzeichnet, dass** das Innenrohr (12) im Durchbruch (42) axialverschiebbar geführt gehalten ist.

6. Wärmetauscher (10) nach einem der Ansprüche 1 bis 4, **dadurch gekennzeichnet, dass** das Innenrohr (12) im Bereich des Durchbruchs (42) mit der Stirnwand (41) des Trennblechs (40) verbunden, vorzugsweise verschweißt ist.

7. Wärmetauscher (10) nach einem der vorangegangenen Ansprüche,
**dadurch gekennzeichnet, dass** die Stirnwand (41) zumindest über einen Teilbereich des Diffusors (15) in Anlage mit diesem ist und im Anlagebereich vorzugsweise mit selbigem verbunden, insbesondere verschweißt ist.

## Claims

1. Heat exchanger (10), in particular exhaust gas cooler of internal combustion engines, comprising a heat exchanger duct (14) and a bypass duct (11), a switching flap (20) being disposed in the flow duct (25) upstream or downstream of the heat exchanger (10), said switching flap (20) dividing the oncoming carrier medium between the heat exchanger duct (14) and the bypass duct (11), and said switching flap (20) being adjoined by a separating plate (40) For separating the two partial flows, the separating plate (40) extending to the start of the bypass duct (11), wherein the bypass duct (11) consists of two tubes, an outer tube 13 and an inner tube (12), placed in one another, wherein the carrier medium flows through the inner tube (12) in its core, wherein the inner tube (12) extends to the separating plate (40) and is joined, in particular guided on or attached to, the separating plate (40), **characterised in that** the separating plate (40) forms an end wall (41) oriented vertical to the flow direction and having an aperture (42) into which the inner tube (12) terminates.

2. Heat exchanger (10) according to claim 1, **characterised in that** the separating plate (40) is joined to the bypass duct (11).

3. Heat exchanger (10) according to any of the preceding claims, **characterised in that** a diffuser (15) is formed between the flow duct (25) and the start of the bypass duct (11), the separating plate (40) being joined, in particular welded, to the diffuser (15) at least in regions.

4. Heat exchanger (10) according to any of the preceding claims, **characterised in that** the switching flap (20) is held on a pivot axis (21) in the flow duct (25), the separating plate (40) extending to the pivot axis (21) and being held on, in particular attached to and preferably welded to, the pivot axis (21) in particular.

5. Heat exchanger (10) according to any of the preceding claims, **characterised in that** the inner tube (12) is guided in the aperture (42) in an axially displaceable manner.

6. Heat exchanger according to any of claims 1 to 4, **characterised in that** the inner tube (12) is joined, preferably welded, to the end wall (41) of the separating plate (40) in the region of the aperture (42).

7. Heat exchanger (10) according to any of the preceding claims, **characterised in that** the end wall (41) is in contact with the diffuser (15) at least over a partial region of the latter and is preferably joined, in particular welded, thereto in the contact region.

## Revendications

1. Echangeur de chaleur (10), en particulier refroidisseur de gaz d'échappement de moteurs à combustion interne, comprenant un conduit d'échangeur de chaleur (14) et un conduit de dérivation (11), où un volet de commande (20) est disposé dans le conduit d'écoulement (25), en amont ou en aval de l'échangeur de chaleur (10), volet de commande qui répartit, sur le conduit (14) de l'échangeur de chaleur et sur le conduit de dérivation (11), le milieu porteur arrivant, et volet de commande auquel se raccorde une tôle de séparation (40) servant à séparer les deux flux partiels, où la tôle de séparation (40) s'étend jusqu'au début du conduit de dérivation (11), le conduit de dérivation (11) étant formé par deux tubes disposés à l'intérieur l'un de l'autre, à savoir un tube extérieur (13) et un tube intérieur (12), où le milieu porteur traverse le tube intérieur (12) dans sa partie centrale, où le tube intérieur (12) s'étend jusqu'à la tôle de séparation (40) et est raccordé à la tôle de séparation (40), en particulier est maintenu ou fixé sur la tôle de séparation, en étant guidé,
**caractérisé en ce que** la tôle de séparation (40) forme une paroi frontale (41) orientée verticalement par rapport à la direction d'écoulement, paroi frontale qui présente une ouverture (42) dans laquelle débouche le tube intérieur (12).

2. Echangeur de chaleur (10) selon la revendications 1,
**caractérisé en ce que** la tôle de séparation (40) est raccordée au conduit de dérivation (11).

3. Echangeur de chaleur (10) selon l'une ou l'autre des revendications précédentes, **caractérisé en ce qu'**un diffuseur (15) est formé entre le conduit d'écoulement (25) et le début du conduit de dérivation (11), où la tôle de séparation (40) est raccordée, en particulier soudée, au moins partiellement au diffuseur (15).

4. Echangeur de chaleur (10) selon l'une quelconque des revendications précédentes, **caractérisé en ce que** le volet dé commande (20) est maintenu sur un axe de pivotement (21) placé dans le conduit d'écoulement (25), où la tôle de séparation (40) s'étend jusqu'à l'axe de pivotement (21) et est maintenue, en particulier fixée, de préférence soudée, en particulier sur l'axe de pivotement (21).

5. Echangeur de chaleur (10) selon l'une quelconque des revendications précédentes, **caractérisé en ce que** le tube intérieur (12) est maintenu en étant guidé et mobile axialement dans l'ouverture (42).

6. Echangeur de chaleur (10) selon l'une quelconque des revendications 1 à 4, **caractérisé en ce que** le tube intérieur (12) est raccordé, de préférence soudé, à la paroi frontale (41) de la tôle de séparation (40), dans la zone de l'ouverture (42).

7. Echangeur de chaleur (10) selon l'une quelconque des revendications précédentes, **caractérisé en ce que** la paroi frontale (41), au moins sur une zone partielle du diffuseur (15), est en contact avec celui-ci et, dans la zone de contact, est raccordée, en particulier soudée, de préférence à ce même diffuseur.
